# EUROPÄISCHE PATENTSCHRIFT

(11) **EP 1 411 669 B1**
(45) Veröffentlichungstag und Bekanntmachung des Hinweises auf die Patenterteilung: **26.02.2014**
(21) Anmeldenummer: 02027838.8
(22) Anmeldetag: 12.12.2002
(51) Int. Cl.: H04L 12/28, H04L 29/06, G06F 9/46, H04L 29/08

(54) **Verfahren zur Steuerung elektronischer Geräte**
Method for controlling electronic devices
Méthode pour contrôler des équipements électroniques

(30) Priorität: 18.06.2002 DE 10227062
(43) Veröffentlichungstag der Anmeldung: 21.04.2004
(73) Patentinhaber: ROBERT BOSCH GMBH, 70442 Stuttgart (DE)
(72) Erfinder: Vollmer, Vasco, 31188 Holle (DE); May, Thomas, 38302 Wolfenbüttel (DE); Praefcke, Werner, 31141 Hildesheim (DE); Kopmann, Wolfgang, 31139 Hildesheim (DE)

(56) Entgegenhaltungen:
- WO-A1-01/19032
- WO-A2-99/59072
- US-A1- 2002 073 244
- CONDRY M ET AL: "Open Service Gateway architecture overview" INDUSTRIAL ELECTRONICS SOCIETY, 1999. IECON '99 PROCEEDINGS. THE 25TH ANNUAL CONFERENCE OF THE IEEE SAN JOSE, CA, USA 29 NOV.-3 DEC. 1999, PISCATAWAY, NJ, USA,IEEE, US LNKD- DOI:10.1109/IECON.1999.816492, Bd. 2, 29. November 1999 (1999-11-29), Seiten 735-742, XP010366642 ISBN: 978-0-7803-5735-8
- BAIER R ET AL: "MULTIMEDIA MIDDLEWARE FOR THE FUTURE HOME" ACM MULTIMEDIA 2001 WORKSHOPS. INTERNATIONAL WORKSHOP ON MULTIMEDIA MIDDLEWARE (M3W). OTTAWA, CANADA, OCT. 5, 2001; [ACM MULTIMEDIA CONFERENCE], NEW YORK, NY : ACM, US, 5. Oktober 2001 (2001-10-05), Seiten 48-51, XP001114065 ISBN: 978-1-58113-396-7
- PAVLIN DOBREV ET AL: "Device and Service Discovery in Home Networks with OSGi" IEEE COMMUNICATIONS MAGAZINE, IEEE SERVICE CENTER, PISCATAWAY, US, Bd. 40, Nr. 8, 1. August 2002 (2002-08-01) , Seiten 86-92, XP011092902 ISSN: 0163-6804

## Beschreibung

Die Erfindung betrifft ein Verfahren zur Steuerung elektronischer Geräte in einem verteilten Netzwerksystem mit
- Gerätekontrollmodulen (DCM) zur Steuerung von Geräten durch andere Geräte in dem Netzwerksystem, wobei die Gerätekontrollmodule (DCM) unmittelbar auf die zu steuernden Geräte zugreifen,
- Gerätekontrollmodul-Verwaltungsmodule zur Verwaltung der Gerätekontrollmodule (DCM) und mit
- Netzwerksteuerungsmodule zur Netzwerksteuerung derart, dass Dienste in Paketen gegliedert verarbeitet werden und Module einzelner Dienste aus verschiedenen Paketen miteinander interagieren.

Die Erfindung betrifft weiterhin ein digitales Gerätenetzwerk.

Verteilte Netzwerksysteme mit daran angeschlossenen elektronischen Geräten nahezu beliebiger Art sind hinreichend bekannt. Aus dem IEEE1394 "P1394A Draft for a High-Performance Serial Bus (Supplement)" ist ein serielles Bussystem bekannt, bei dem verschiedene Endgeräte (Knoten) entweder über ein vier- bis sechsadriges Kabel oder einen Lichtwellenleiter angeschlossen werden. Mindestens ein Knoten kann dabei in der Art ausgeführt sein, dass er zusätzliche Verwaltungsfunktionen für das Netzwerk übernehmen kann (Busmanagement).

Neben diesem IEEE-Standard 1394 gibt es eine busunabhängige Erweiterung, die unter dem Namen HAVi (Home Audio Video interoperability) spezifiziert ist (HAVi 1.1 Specification of the Home Audio/Video interoperability Architecture HAVi Inc., May 15, 2001). Diese HAVi-Spezifikation beschreibt insbesondere die Fernkontrolle von Geräten von jedem anderen Punkt im Gerätenetzwerk, wobei die beschriebenen Steuerungsverfahren in erster Linie für den Einsatz in einem IEEE-1394-Netzwerk vorgesehen sind. In der Spezifikation ist eine verteiltes Model beschrieben, bei dem die Steuerung der Geräte über Gerätekontrollmodule (DCM), sogenannte "Device Control Modules" vorgenommen wird. Diese Gerätekontrollmodule (DCM) werden als Software-elemente (SE) auf dem Gerät, welches ein anderes Gerät kontrollieren möchte, ausgeführt. Hierbei sind die Gerätekontrollmodule (DCM) jeweils spezifisch für ein bestimmtes Gerät oder eine Geräteklasse.

Die einzelnen Module des Netzwerksteuerungskonzeptes nach dem HAVi-Standard werden als Softwareelemente (SE) realisiert, die einheitlich adressiert werden. Die Softwareelemente können in den meisten Fällen sowohl zentral als auch verteilt angeordnet sein. Es ist somit eine Implementierung mit nur einer Instanz eines bestimmten Softwareelementes, z. B. eines Stream Managers, bis hin zu einer Implementierung möglich, die in jedem Gerät eine solche Instanz vorsieht.

Folgende Softwareelemente (SE) sind in einem verteilten System nach dem HAVi-Standard vorhanden:
Stream Manager (SM): Der Stream Manager dient dem Auf- und Abbauen der Verwaltung von isochronen Verbindungen (Streams) zwischen Softwareelementen und/oder Geräten. Der Stream Manager kann ebenso wie das Registrierungsmodul (Registry) als verteiltes System aufgebaut sein. Dabei dienen spezielle Befehle dazu, den Zustand aller Stream Manager oder eines bestimmten Stream Managers zu erhalten.

Messaging System (MS): Das Meldesystemmodul bzw. Messaging System ist zuständig für Nachrichten, die zwischen den Softwareelementen (SE) ausgetauscht werden.

Event Manager (EM): Der Event Manager transportiert Mitteilungen über Zustandsänderungen im verteilten System zu den Kommunikationsteilnehmern (Geräten).

Registrierungsmodul: Das Registrierungsmodul (Registry) beinhaltet Informationen über jedes im Netzwerk verfügbare Softwarelement (SE) und jedes verfügbare Gerät. Informationen über die einzelnen Softwareelemente werden dabei in Attributen abgelegt. Zusätzlich zu den vordefinierten Attributen ist es möglich, weitere Attribute hinzuzufügen. Die Architektur des Registrierungsmoduls ist ein verteiltes System, d. h. jedes Gerät kann einen Teil des gesamten Registrierungsmoduls beinhalten, sie kann aber auch zentral gehalten werden. Für den Zugriff auf das Registrierungsmodul (Registry) ist dies nicht sichtbar, da die verschiedenen Instanzen des Registrierungsmoduls innerhalb des Netzwerkes ggf. die angeforderten Informationen selbsttätig austauschen.

Resource Manager (RM): Der Resource Manager führt die Belegung und die Freigabe von Resourcen (Geräten und Softwareelementen) durch und speichert geplante Vorgänge, wie z. B. Videorecorderaufnahmen.

Gerätekontrollmodul-Manager (DCM-Manager): Der Gerätekontrollmodul-Manager (DCM-Manager) ist verantwortlich für das Installieren und Deinstallieren von Gerätekontrollmodulen (DCM) bei entsprechend geeigneten Geräten. Dabei wird ein standardisiertes Verfahren zur Installation von Gerätekontrollmodulen im JAVA-Bytecode-Format angeboten. Eine Installation von nativem Code (Binary) ist nicht im Standard beschrieben, kann jedoch als proprietäre Lösung hinzufügt werden.

Gerätekontrollmodule (DCM): Ein Gerätekontrollmodul bzw. Device Control Module (DCM) ist ein Softwareelement, das ein oder mehrere funktionale Steuerungsmodule (Functional Control Module-FCM) zu einem Gerätetreiber zusammenführt.

Funktionale Steuerungsmodule (FCM): Ein funktionales Steuerungsmodul (Functional Control Module-FCM) ist ein Softwareelement, mit dem eine funktionale Einheit eines Gerätes, wie z. B. eines CD-Laufwerks oder eines UKW-Tuners, angesteuert wird. Ein Gerätekontrollmodul (DCM) wird dabei aus den allen Gerätekontrollmodulen (DCM) gemeinsamen Grundfunktionen und gerätespezifischen funktionalen. Kontrollmodulen (FCM) gebildet.

Diese Module oder die jeweils in einem Gerät benötigten Module bilden eine einheitliche Applikationsschnittstelle. Durch diese einheitliche Schnittstelle wird eine Interoperabilität zwischen Applikationen und Geräten verschiedener Hersteller erreicht (Interoperability API).

Weiterhin ist von der Open Service Gateway Initiative (OSGi) ein Standard für eine Diensteplattform definiert, auf die zur Laufzeit Dienste dynamisch geladen, aktiviert und wieder entfernt werden können (http://www.osgi.org). Die Dienste werden in Paketen gegliedert verarbeitet, die als Bundles bezeichnet werden. Die Diensteplattform zeichnet sich dadurch aus, dass sie er den Modulen einzelner Dienste aus verschiedenen Paketen erlaubt, zu interagieren. Die Interoperabilität wird durch die Standardisierung von Schnittstellen erreicht. Außerdem soll die Diensteplattform sowohl den Zugang zu Geräten ermöglichen, die im lokalen Netzwerk angeschlossen sind, als auch eine Verbindung zum globalen Netzwerk (WAN) unterstützen. Die Realisierung der Geräteverbindungen bzw. der Netzwerke wird dabei nicht definiert, sondern es wird auf bestehende Standards zurückgegriffen und diese auf funktionaler Basis durch eine Schnittstellenspezifikation zur Applikationsebene abstrahiert. Außerdem ist vorgesehen, dass alle Verwaltungsoperationen auch aus der Ferne über eine Netzwerkverbindung vorgenommen werden können. Die Realisierung und Spezifikation der Diensteplattform nach dem OSGi-Standard verwendet die dynamischen Dienste unterstützende Softwaretechnologie JAVA.

Aus der US 2002/0073244 A1 geht ein Verfahren und eine Einrichtung zur Integration von IP-Geräten in einem HAVi-Netzwerk hervor. Aus der WO 99/59072 A2 geht ein Medienmanager zur Steuerung autonomer Mediengeräte in einer Netzwerkumgebung hervor. Aus der Veröffentlichung "Open Service Gateway Architecture Overview", Michael Condry et.al., IEEE 1999, geht ein Überblick über die Architektur und die Spezifikationen hervor, die durch die Open Services Gateway-Initiative definiert wurden.

Aufgabe der Erfindung war es, ein verbessertes Verfahren zur Steuerung elektronischer Geräte in einem verteilten Netzwerksystem zu schaffen, mit dem beispielsweise eine OSGi-konforme Applikationsplattform mit einem nach dem HAVi-Standard arbeitenden Netzwerk und den darin eingebundenen Geräten integriert werden kann.

Die Aufgabe wird mit dem gattungsgemäßen Verfahren erfindungsgemäß gelöst durch Austausch von Steuerungsinformationen zwischen Netzwerksteuerungsmodulen und den Gerätemodul-Verwaltungs-modulen zur Registrierung oder Ansteuerung von Gerätekontrollmodulen (DCM), ohne dass ein unmittelbarer Datenaustausch zwischen den Netzwerksteuerungsmodulen und den Geräten erfolgt.

Im Unterschied zu den herkömmlichen Verfahren wird somit vorgeschlagen, dass die zur Integration von Softwarekomponenten als Module verfügbaren Methoden der nach verschiedenen Standards arbeitenden Netzwerksteuerungsschichten miteinander kommunizieren und nicht, wie beispielsweise bei dem OSGi-Standard vorgesehen, direkt mit den zu registrierenden Geräten. Vielmehr werden die zur Netzwerksteuerung im OSGi-Standard verfügbaren Netzwerksteuerungsmodule so eingesetzt, dass diese mit den Gerätekontrollmodul-Verwaltungsmodulen nach dem HAVi-Standard kommunizieren, um die Installation von HAVi-konformen Gerätekontrollmodulen (GCM) vorzunehmen.

Durch diese Verwendung von bereits vorhandenen Methoden nach den definierten Standards kann das Verfahren leicht in bestehende Implementierungen von Netzwerken nach dem HAVi- und OSGi-Standard vorgenommen werden. Mit dem Verfahren können verbesserte oder erweiterte Gerätetreiber dynamisch nachgeladen werden. Zudem werden automatisierte Updates von Treibern unterstützt. Zudem können neue Applikationen in einem standardisierten Format z. B. über eine Funktionsschnittstelle nachgeladen werden, die HAVi-konforme Geräte verwenden oder von solchen Geräten verwendet werden und den Nutzen dieser Geräte erhöhen. Durch das Verfahren ist weiter in vorteilhafter Weise ein Fernzugriff auf HAVi-konforme Geräte über Netzwerksteuerungsmodule nach dem OSGi-Standard möglich.

Gegenüber den herkömmlichen Netzwerksteuerungsverfahren, insbesondere nach dem OSGi-Standard hat das Verfahren den Vorteil, dass das Auffinden und Ansteuern von Geräten im lokalen Netzwerk durch die Nutzung der Gerätekontrollmodul-Verwaltungsmodule vorzugsweise nach dem HAVi-Standard stark vereinfacht werden. Die automatische Installation von Gerätetreibern (Hot Plug and Play) wird durch das Verfahren unterstützt und es können Standardkomponenten aus der Unterhaltungselektronik in dem Netzwerksystem verwendet werden. Zudem wird die Kommunikation über das lokale Netzwerk durch die Resourcenverwaltung der Geräteköntrollmodul-Verwaltungsmodule vorzugsweise nach dem HAVi-Standard überwacht. Wenn Geräte im lokalen Netzwerk sowohl von den Netzwerksteuerungsmodulen beispielsweise nach dem OSGi-Standard aus angesteuert werden, als auch untereinander und mit Applikationen ohne diese Netzwerksteuerungsmodule beispielsweise nach dem OSGi-Standard werden Zugriffskonflikte durch die verfügbaren Methoden der Gerätekontrollmodul-Verwaltungsmodule beispielsweise nach dem HAVi-Standard aufgelöst.

Vorzugsweise erfolgt der Austausch der Steuerungsinformationen mit einem Gerätekontrollmodul-Treibermodul (DCM-Driver) als Netzwerksteuerungsmodul, wobei das Gerätekontrollmodul-Treibermodul zur Registrierung von Schnittstellen, zur Steuerung der Geräte in dem Netzwerksystem und zum Umsetzen von Methodenaufrufen der registrierten Schnittstellen in Nachrichtendaten für die Gerätekontrollmodule ausgebildet ist. Weiterhin ist es vorteilhaft, einen Austausch der Steuerungsinformationen mit einem Basistreibermodul (HAVi Base Driver) als Netzwerksteuerungsmodul vorzusehen. Das Basistreibermodul ist hierbei zur Registrierung von Gerätediensten mit Informationen über zugehörige Geräte und zum Anpassen und Weiterleiten von Steuerungsdaten der Netzwerksteuerungsmodule an die Gerätekontrollmodul-Verwaltungsmodule ausgebildet.

Zusätzlich zu den bekannten Netzwerksteuerungsmodulen sind somit spezialisierte Gerätekontrollmodul-Treibermodule und Basistreibermodule vorgesehen, um von den Netzwerksteuerungsmodulen beispielsweise nach dem OSGi-Standard auf die Gerätekontrollmodul-Verwaltungsmodule beispielsweise nach dem HAVi-Standard zuzugreifen, um ohne unmittelbaren Zugriff auf die Geräte neue Gerätedienste zu registrieren, Gerätetreiber zu installieren oder auszutauschen etc.

Vorzugsweise ist zudem mindestens ein Registrierungsmodul als Gerätekontrollmodul-Verwaltungsmodul vorgesehen, wie es beispielsweise nach dem HAVi-Standard definiert ist. Die registrierten Gerätekontrollmodule werden hierbei in einer Liste des Registrierungsmoduls abgespeichert.

Die Registrierung von Geräten erfolgt vorzugsweise mit den folgenden Schritten:
- Auswahl eines Gerätekontrollmoduls für das zu registrierende Gerät;
- Registrieren des Gerätekontrollmoduls bei dem Registrierungsmodul;
- Übersenden einer Nachricht von dem Registrierungsmodul an das Basistreibermodul zur Information über das registrierte Gerät;
- Registrieren eines Gerätedienstes mit Informationen über das registrierte Gerät durch das Basistreibermodul;
- Aktivieren eines Gerätekontrollmodul-Treibermoduls für das registrierte Gerät durch die Netzwerksteuerungsmodule;
- Registrieren einer Schnittstelle zur Steuerung des registrierten Gerätes durch das aktivierte Gerätekontrollmodul-Treibermodul.

Die Steuerung eines registrierten Gerätes erfolgt dann vorzugsweise mit den Schritten:
- Anpassen von Zugriffssteuerungsdaten der Netzwerksteuerungsmodule beim Aufrufen einer registrierten Schnittstelle zur Steuerung des Gerätes durch das Gerätekontrollmodul-Treibermodul und Senden angepaßter Zugriffssteuerungsdaten an das Basistreibermodul;
- Weiterleiten des Aufrufs der Schnittstelle von dem Basistreibermodul an ein Meldesystemmodul der Gerätekontrollmodul-Verwaltungsmodule;
- Weiterleiten des Aufrufs der Schnittstelle von dem Meldesystemmodul an das zu dem anzusteuernden Gerät gehörende Gerätekontrollmodul zur Steuerung des Gerätes durch das Gerätekontrollmodul.

Hierbei werden die Schnittstellen durch das Meldesystemmodul vorzugsweise prioritätsgesteuert aufgerufen, um einen Zugriffskonflikt aufzuheben.

Das Überprüfen und Auflösen von Zugriffskonflikten auf Gerätekontrollmodule erfolgt zudem vorzugsweise mit einem Resourcenverwaltungsmodul, das als Gerätekontrollmodul-Verwaltungsmodul realisiert ist.

Das Registrieren zusätzlicher Gerätekontrollmodule für ein Gerät erfolgt vorzugsweise mit einem Gerätetreiberinstallationsmodul als Netzwerksteuerungsmodul mit den Schritten:
- Übergeben eines Gerätekontrollmoduls an das Gerätetreiberinstallationsmodul;
- Weiterleiten des übergebenen Gerätekontrollmoduls an das Gerätekontrollmodul-Treibermodul;
- Installieren des Gerätekontrollmoduls durch das Gerätekontrollmodul-Treibermodul.

Bei dem Registrieren zusätzlicher Gerätekontrollmodule erfolgt weiterhin vorzugsweise ein Überprüfen durch das Gerätetreiberinstallationsmodul mittels Zugriffs auf einen Gerätetreibermodul-Manager, der als Gerätekontrollmodul-Verwaltungsmodul realisiert ist, ob bereits ein Gerätetreibermodul für das zu registrierende Gerät installiert ist und das installierte Treibermodul ersetzt werden soll. Dann erfolgt ggf. ein Deinstallieren des vorhandenen Gerätetreibermoduls durch das Gerätetreiberinstallationsmodul.

Ein Ersetzen von Gerätekontrollmodulen durch andere Gerätekontrollmodule, wobei das zugehörige Gerätekontrollmodul-Treibermodul beibehalten bleibt, erfolgt vorzugsweise mit den Schritten:
- Übergeben eines neuen Gerätekontrollmoduls von dem zugehörigen Gerätekontrollmodul-Treibermodul an das Basistreibermodul;
- Weiterleiten des Gerätekontrollmoduls von dem Basistreibermodul an das Gerätetreiberinstallationsmodul;
- Deinstallieren des zu ersetzenden Gerätekontrollmoduls durch das Gerätetreiberinstallationsmodul und den Gerätetreibermodul-Manager, wobei das Gerätekontrollmodul bei dem Registrierungsmodul abgemeldet wird;
- Installieren des neuen Gerätekontrollmoduls durch das Gerätetreiberinstallationsmodul und den Gerätetreibermodul-Manager, wobei das Gerätekontrollmodul bei dem Registrierungsmodul angemeldet wird,
- Zuordnen des in dem ersetzten Gerätekontrollmodul zugeordneten Geräteservice zu dem neuen Gerätekontrollmodul.

Wie bereits erwähnt sind die Gerätekontrollmodule und Gerätekontrollmodul-Verwaltungsmodule vorzugsweise konform zu dem Home-Audio-Video-Interoperability-Standard (HAVi). Die Netzwerksteuerungs- module sind vorzugsweise konform zu dem Open-Service-Gateway-Initiative-Standard (OSGi).

Die Aufgabe wird weiterhin durch ein digitales Gerätenetzwerk erfindungsmäß durch Steuerungsprogrammmittel gelöst, die zur Durchführung des oben beschriebenen Verfahrens ausgebildet sind. Die Steuerungsprogrammmittel werden hierbei als Softwareelemente (SE) nach dem HA-Vi-Standard oder als Anwendungsprogrammschnittstellen (Application Programming Interfaces-API) nach dem OSGi-Standard beispielsweise in der Programmiersprache JAVA realisiert.

Die Erfindung wird nachfolgend anhand der beigefügten Zeichnungen näher erläutert. Es zeigen:
- Figur 1 -: Netzwerksteuerungsmodule nach dem OSGi-Standard und Gerätekontrollmodul-Verwaltungsmodule nach dem HAVi-Standard zur Einbingung von HAVi-konformen Geräten in ein OSGi-Standard-konformes verteiltes Netzwerksystem;
- Figur 2 -: Ablaufdiagramm zur Einbindung von HAVi-Standard-konformen Geräten in ein OSGi-Standard-konformes verteiltes Netzwerksystem;
- Figur 3 -: OSGi-Standard-konforme Netzwerksteuerungsmodule und HAVi-konforme Gerätekontrollmodul-Verwaltungsmodule zur Anmeldung zusätzlicher Gerätekontrollmodule;
- Figur 4 -: Auflaufdiagramm zur Anmeldung zusätzlicher Gerätemodule;
- Figur 5 -: Blockdiagramm der OSGi-Standard-konformen Netzwerksteuerungsmodule und HAVi-Standard-konformen Gerätekontrollmodul-Verwaltungsmodule zum Update vorhandener Gerätekontrollmodule;
- Figur 6 -: Ablaufdiagramm für das Update vorhandener Geräte-kontrollmodule.

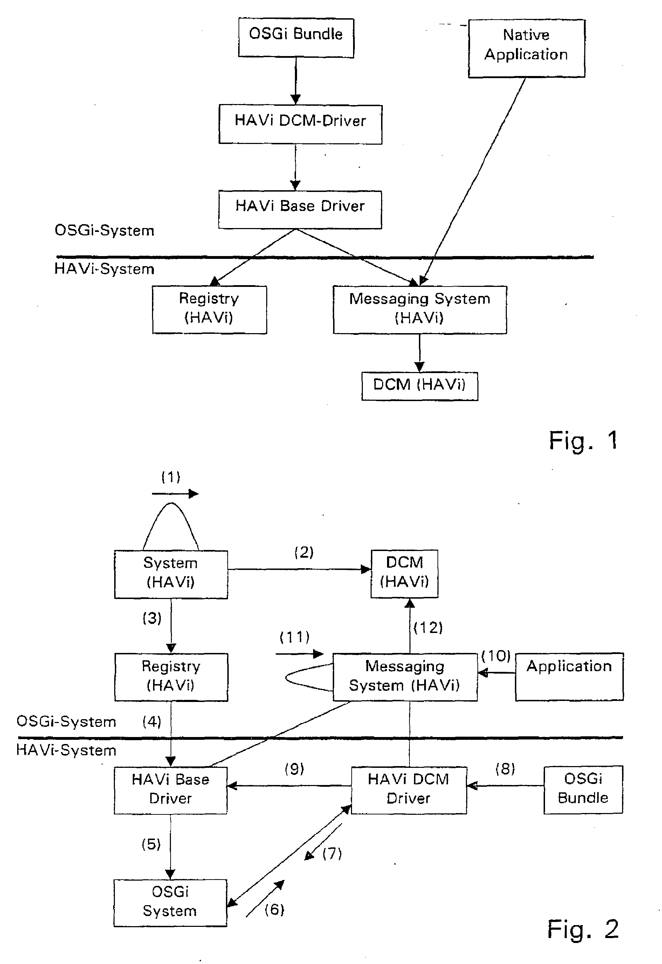

Figur 1 zeigt die an der Einbindung von HAVi-Standard-konformen Geräten in ein OSGi-Standard-konformes verteiltes Netzwerksystem beteiligten Netzwerksteuerungs- und Gerätekontrollmodul-Verwaltungsmodulen, die vorzugsweise als Softwareelemente bzw. Anwendungsprogrammschnittstellen (API) ausgeführt sind.

Ein HAVi-Standard-konformes Gerät wird durch ein HAVi-Standard-konformes Gerätekontrollmodul DCM zugänglich gemacht. Auf dieses Gerätekontrollmodul DCM greift das in dem HAVi-Standard spezifizierte Meldesystemmodul MS (Messaging System) zu, das von Applikationen genutzt werden kann, um das Gerätekontrollmodul DCM und damit das zugehörige Gerät zu steuern.

Erfindungsgemäß wird in dem OSGi-Standard-konformen Netzwerksystem ein zusätzliches Bundle, nämlich ein Basistreibermodul Base Driver installiert, das auf das Meldesystemmodul MS und auf eine im HAVi-Standard definiertes Registrierungsmodul Registry zugreift.

Das erfindungsgemäße Basistreibermodul hat folgende Aufgaben:
- Beziehen einer Liste der angemeideten Gerätekontrollmodule DCM von dem Registrierungsmodul;
- Entgegennehmen von Nachrichten des Registrierungsmoduls Registry bei der An- und Abmeldung von Gerätekontrollmodulen DCM;
- Registrieren eines Gerätedienstes (Device Service) für jedes angemeldete Gerätekontrollmodul DCM in dem OSGi-Standard-konformen verteilten Netzwerksystem;
- Weiterleiten von Nachrichten von zugeordneten OSGi-Standard-konformen Treiberdiensten (Driver Service) an das Meldesystemmodul MS;
- Abmelden der in dem OSGi-Standard-konformen Netzwerk-system registrierten zugehörigen Gerätedienste (Device Service) beim Abmelden von Gerätekontrollmodulen.

Für weitere Steuerungsverfahren können in dem Basistreibermodul Zusatzfunktionen implementiert werden, auf die nachfolgend noch eingegangen werden wird.

Auf das Basistreibermodul greift erfindungsgemäß ein Gerätekontrollmodul-Treibermodul DCM-Driver zu, der als zusätzliches OSGi-Standard-konformes Bundle in Form eines Treiberdienstes (OSGi-Driver-Service) implementiert wird. Das Gerätekontrollmodul-Treibermodul DCM-Driver hat folgende Aufgaben:
- Registrieren einer Schnittstelle zum Steuern des HAVi-Standard-konformen Gerätes in dem OSGi-Standard-konformen Netzwerksystem und zur Verfügung stellen des Gerätes für andere OSGi-Standard-konforme Bundles;
- Umsetzen von Methodenaufrufen dieser Schnittstellennachrichten an das Gerätekontrollmodul DCM und Übergeben der Nachrichten an das Basistreibermodul Base Driver.

Auf das Gerätekontrollmodul-Treibermodul DCM-Driver können andere OSGi-Standard-konforme Bundles zugreifen, um das Gerät zu steuern. Daneben können auch andere Applikationen, die beispielsweise nicht in JAVA implementiert sind oder nicht zu dem OSGi-Standard-konformen Netzwerksystem gehören, über das Meldesystemmodul MS auf das Gerätekontrollmodul DCM und damit auf das Gerät zugreifen.

Die Figur 2 zeigt ein Ablaufdiagramm zur Anmeldung von Geräten in dem verteilten Netzwerksystem. Die Anmeldung der HAVi-Standard-konformen Geräte in das OSGi-Standard-konforme verteilte Netzwerksystem erfolgt mit den folgenden Schritten:
1. Automatischen Erkennen eines neu angeschlossenen Gerätes durch die HAVi-Standard-konformen Gerätekontrollmodul-Verwaltungsmodule;
2. Beschaffen eines Gerätekontrollmoduls DCM zur Steuerung des neuen Gerätes durch die HAVi-Gerätekontrollmodul-Verwaltungsmodule, sofern noch kein entsprechendes Gerätekontrollmodul DCM vorhanden ist;
3. Anmelden des Gerätekontrollmoduls DCM bei dem HAVi-Standard-konformen Registrierungsmodul Registry;
4. Senden einer Nachricht von dem Registrierungsmodul Registry an das Basistreibermodul Base Driver in dem OSGi-Netzwerk-system und Informieren des Basistreibermoduls Base Driver über das neue Gerät. Hierzu kann das Basistreibermodul Basedriver z. B. ein Gerätekontrollmodul DCM registrieren, das einen sogenannten Notification Request an Informationen über neue Geräte anmeldet. Alternativ kann das Basistreibermodul Base Driver auch als Applikation ein Notification Request setzen;
5. Registrieren eines Gerätedienstes Device Service mit Informationen über das neue Gerät durch das Basistreibermodul Base Driver;
6. Suchen und Installieren eines geeigneten Treiberdienstes Driver Service durch das OSGi-Netzwerksystem, wobei der Treiberservice die Funktionalität des Gerätes in dem OSGi-Netz-werksystem verfügbar macht. Dieser Mechanismus ist in dem OSGi-Standard definiert und umfaßt ggf. auch die Beschaffung eines noch nicht auf der Diensteplattform vorhandenen Gerätetreibers. Dieser Treiberdienst wird von dem Gerätekontrollmodul-Treibermodul DCM bereitgestellt. Für unterschiedliche Gerätekontrollmodule DCM kann es verschiedene Gerätekontrollmodul-Treibermodule DCM-Driver geben;
7. Registrieren einer Schnittstelle in dem OSGi-Netzwerksystem durch das Gerätekontrollmodul-Treibermodul DCM-Driver, um mit der Schnittstelle das Gerät zu steuern.

Dabei sind die Schritte 1 bis 3 bereits aus dem HAVi-Standard bekannt. Es wird deutlich, daß die Registrierung der Gerätekontrollmodule DCM erfindungsgemäß durch Kommunikation der OSGi-Netzwerksteuerungsmodule mit den HAVi-Gerätekantrolimodul-Verwaltungs-modulen und nicht, wie bei dem OSGi-Standard vorgesehen, direkt mit den Geräten erfolgt.

Die Figur 2 zeigt weiterhin den Ablauf beim Zugriff auf die registrierten Geräte mit den folgenden Schritten:
8. Steuerung eines Gerätekontrollmoduls DCM durch ein OSGi-Bundle durch Erkennung, daß eine Schnittstelle angemeldet wurde und Zugriff auf diese Schnittstelle;
9. Umsetzen des Zugriffs auf die Schnittstelle in Nachrichten durch das Gerätekontrollmodul-Treibermodul DCM-Driver und Senden der Nachrichten über das Basistreibermodul Basedriver an das Geräte-kontrollmodul DCM;
10. Weiterleiten des Schnittstellenaufrufs durch das Basistreibermodul Base Driver an das Meldesystemmodul MS;
11. Weiterleiten des Schnittstellenaufrufs an das Gerätekontrollmodul DCM, welches das Gerät entsprechend steuert, durch das Meldesystemmodul MS. Bei Zugriffskonflikten, beispielsweise bei einem Zugriffsversuch auf ein bereits reserviertes Gerät, prüft ein Resource-Manager die Prioritäten der beteiligten Applikationen bzw. des OSGi-Netzwerksystems und ändert anhand dieser Informationen ggf. die Reservierung der Geräte. Zudem greifen auch Applikationen, die nicht zu dem OSGi-Netzwerk-system gehören, über das Meldesystemmodul MS auf dasselbe Gerätekontrollmodul zu.
12. Weiterleiten der Aufrufe mit der höchsten Priorität durch das Meldesystemmodul MS an das entsprechende Gerätekontrollmodul DCM,

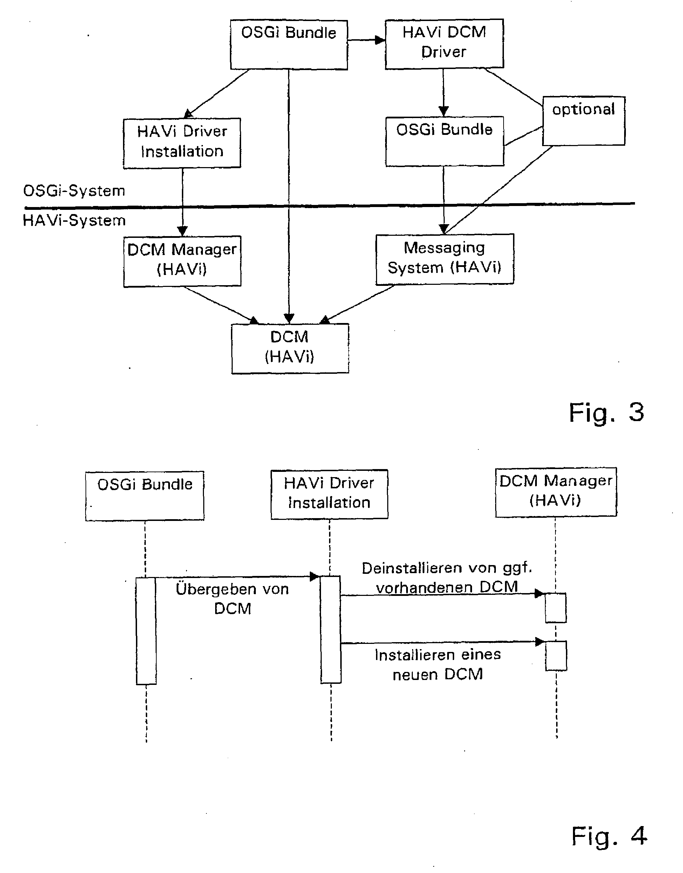

Die Figur 3 zeigt ein Blockdiagramm der beim Anmelden eines zusätzlichen Gerätekontrollmoduls DCM beteiligten Softwareelemente. Es ist ein zusätzliches OSGi-Standard-konformes Gerätetreiberinstallationsmodul DriverInstallation vorgesehen, auf das ein OSGi-Bundle zugreift, welches die Anmeldung des zusätzlichen Kontrollmoduls vornimmt. Die Aufgaben des Gerätetreiberinstallationsmoduls DriverInstallation sind:
- Entgegennehmen von Gerätekontrollmodulen DCM, die angemeldet werden sollen;
- Deinstallieren der ggf. zu ersetzenden Gerätekontrollmodule DCM mit Hilfe eines Gerätekontrollmodul-Managers DCM-Manager;
- Übergeben des Gerätekontrollmodule DCM an den Gerätekontrollmodul-Manager zur Installation;

Hierbei greift das Gerätetreiberinstallationsmodul Driver Installation auf den in dem HAVi-Standard spezifizierten Gerätekontrollmodul-Manager DCM-Manager zu. Dieser hat wiederum Zugriff auf das zu installierende Gerätekontrollmodul DCM.

Die Figur 4 läßt ein Ablaufdiagramm für die Anmeldung zusätzlicher Gerätekontrollmodule DCM aus dem OSGi-Netzwerksystem heraus erkennen. Die Anmeldung erfolgt mit den Schritten:
a) Übergeben des Gerätekontrollmoduls DCM an das Gerätetreiber installationsmodul Driverinstallation durch das OSGi-Bundle, welches ein Gerätekontrollmodul DCM installieren läßt;
b) Überprüfen mit Hilfe des Gerätekontrollmodul-Managers DCM-Manager durch das Gerätetreiberinstallationsmodul Driver Installation, ob bereits ein Gerätekontrollmodul DCM in dem HAVi-Gerätesystem installiert ist, das durch das neue Gerätekontrollmodul DCM ersetzt werden soll und ggf. Deinstallieren des vorhandenen Gerätekontrollmoduls DCM;
c) Installieren des neuen Gerätekontrollmoduls DCM mit Hilfe des Gerätekontrollmodul-Managers DCM-Manager durch das Gerätetreiberinstallationsmodul Driverinstallation

Der Gerätezugriff erfolgt anschließend wie oben beschrieben, wobei in dem OSGi-Netzwerksystem ein Gerätekontrollmodul-Treibermodul DCM-Driver für das neue Gerätekontrollmodul DCM vorhanden sein muß. Die Deaktivierung und Installation eines Gerätekontrollmodul-Treibermoduls DCM-Driver ist Teil des bekannten OSGi-Standards.

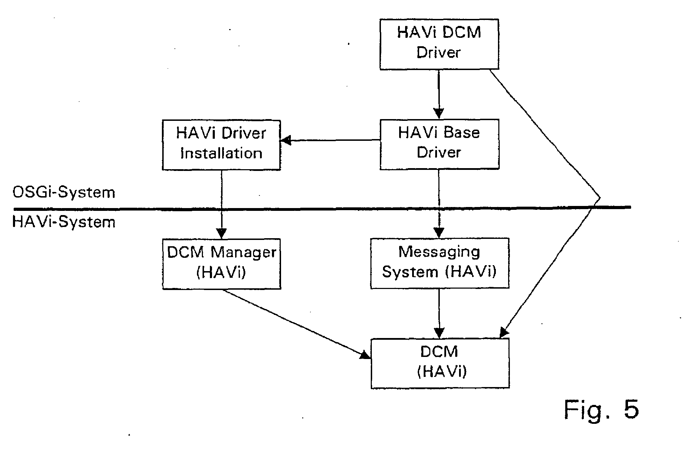

Die Figur 5 zeigt die für einen Update vorhandener Gerätekontrollmodule DCM verwendeten Softwarekomponenten. Im Unterschied zu den oben beschriebenen Verfahren wird jedoch nur ein vorhandenes Gerätekontrollmodul DCM ersetzt, wobei das zugehörige Gerätekontrollmodul-Treibermodul DCM-Driver installiert bleibt. Mit dem Gerätekontrollmodul DCM wird dabei lediglich die Schnittstelle zu dem HAVi-Gerätesystem ausgetauscht, ohne dass sich das Verhalten des OSGi-Netzwerksystems ändert.

Zusätzlich zu den bisher beschriebenen Funktionalitäten ist hierzu bei dem Gerätekontrollmodul-Treibermodul DCM-Driver ein Zugriff auf ein Gerätekontrollmodul DCM realisiert, das das in dem HAVi-Geräte-system vorhandene Gerätekontrollmodul ersetzen soll. Auf das zu ersetzende Gerätekontrollmodul DCM hat das Gerätekontrollmodul-Treibermodul DCM-Driver über das Basistreibermodul Base Driver und das Meldesystemmodul MS einen Zugriff.

Weiterhin greift das Basistreibermodul Base Driver auf das Gerätetreiberinstallationsmodul Driver Installation zu. Das Basistreibermodul Base Driver hat die folgenden zusätzlichen Funktionalitäten:
- Entgegennehmen eines neuen Gerätekontrollmoduls DCM von dem Gerätekontrollmodul-Treibermodul DCM-Driver und Übergeben des neuen Gerätekontrollmoduls DCM zur Installation an das Gerätetreiberinstallationsmodul Driver Installation;
- Sicherstellen, dass das Gerätekontrollmodul DCM, das bei dem Update in dem HAVi-Gerätesystem ersetzt wird, nicht durch den Gerätekontrollmodul-Manager DCM-Manager abgemeldet wird;
- Zuordnen des für das alte Gerätekontrollmodul DCM erzeugten Gerätedienstes Deviceservice zu dem neuen Gerätekontrollmodul DCM beim Anmelden des neuen Gerätekontrollmoduls DCM in dem HAVi-Gerätesystem.

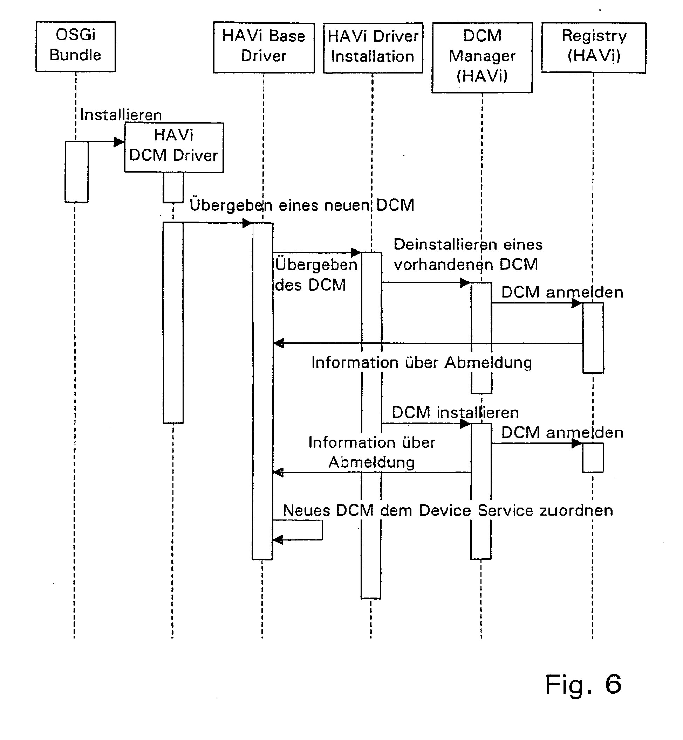

Die Figur 6 läßt ein Ablaufdiagramm des Updates vorhandener Gerätekontrollmodule DCM erkennen. Das Update vorhandener Gerätekontrollmodule DCM unter Beibehaltung der zugehörigen Gerätekontrollmodul-Treibermodule DCM-Driver erfolgt mit den folgenden Schritten:
a) Installieren eines Gerätekontrollmodul-Treibermoduls zu einem neuen Gerätedienst Deviceservice durch das OSGi-Netzwerksystem, wie oben beschrieben;
b) Übergeben eines neuen Gerätekontrollmoduls DCM von dem Gerätekontrollmodul-Treibermodul DCM-Driver an das Basistreibermodul Base Driver, wobei das übergebene Gerätekontrollmodul DCM das vorhandene Gerätekontrollmodul DCM ersetzen soll;
c) Übergeben des Gerätekontrollmoduls DCM von dem Basistreibermodul Base Driver an das Gerätetreiberinstallationsmodul Driverlnstallation;
d) Deinstallieren des zu ersetzenden Gerätekontrollmoduls DCM durch das Gerätetreiberinstallationsmodul DriverInstallation mit Hilfe des Gerätetreiberkontrollmodul-Managers
e) Abmelden des zu ersetzenden Gerätekontrollmoduls DCM in dem Registrierungsmodul Registry durch den Gerätekontrollmodul-Manager DCM-Manager;
f) Informieren des Basistreibermoduls Basedriver über die Abmeldung durch das Registrierungsmodul Registry, wobei das Basistreibermodul Base Driver hierauf nicht reagiert;
g) Installieren des neuen Gerätekontrollmoduls DCM durch das Gerätetreiberinstallationsmodul DriverInstallation mit Hilfe des Gerätekontrollmodul-Managers DCM-Manager;
h) Anmelden des neuen Gerätekontrollmoduls DCM in dem Registrierungsmodul Registry durch den Gerätekontrollmodul-Manager;
i) Informieren des Basistreibermoduls Base Driver über die Anmeldung durch das Registrierungsmodul Registry;
j) Zuordnen des Gerätedienstes Deviceservice, der vorher dem zu ersetzenden Gerätekontrollmodul DCM zugeordnet war, zu dem neuen Gerätekontrollmodul DCM durch das Basistreibermodul Base Driver.

Das Verfahren ist vorzugsweise in OSGi-Standard-konformen Netzwerksystemen insbesondere in Kraftfahrzeugbordnetzen einsetzbar.

## Patentansprüche

1. Verfahren zur Steuerung elektronischer Geräte in einem verteilten Netzwerksystem mit
- Gerätekontrollmodulen (DCM) zur Steuerung von Geräten durch andere Geräte in dem Netzwerksystem, wobei die Gerätekontrollmodule (DCM) unmittelbar auf die zu steuernden Geräte zugreifen,
- Gerätekontrollmodul-Verwaltungsmodulen zur Verwaltung der Gerätekontrollmodule (DCM), und mit
- als Softwaremodule ausgeführten Netzwerksteuerungsmodulen zur Netzwerksteuerung der Art, dass eine Diensteplattform gebildet ist, bei der zur Laufzeit Dienste dynamisch geladen, aktiviert und wieder entfernt werden können, wobei Dienste in Paketen gegliedert verarbeitet werden und die Softwaremodule einzelner Dienste aus verschiedenen Paketen miteinander interagieren,
**gekennzeichnet durch**
Austausch von Steuerungsinformationen zwischen Netzwerksteuerungsmodulen und den Gerätekontrollmodul-Verwaltungs-modulen zur Registrierung oder Ansteuerung von Gerätekontrollmodulen (DCM), ohne dass ein unmittelbarer Datenaustausch zwischen den Netzwerksteuerungsmodulen und den Geräten erfolgt, so dass zur Integration von Softwarekomponenten als Module verfügbare Methoden von nach verschiedenen Standards arbeitenden Netzwerksteuerungsschichten miteinander kommunizieren.

2. Verfahren nach Anspruch 1, **gekennzeichnet durch** Austausch der Steuerungsinformationen mit einem Gerätekontrollmodul-Treibermodul (DCM-Driver) als Netzwerksteuerungsmodul, wobei das Gerätekontrollmodul-Treibermodul (DCM-Driver) zur Registrierung von Schnittstellen zur Steuerung der Geräte in dem Netzwerk-system und zum Umsetzen von Methodenaufrufen der registrierten Schnittstellen in Nachrichtendaten für die Gerätekontrollmodule (DCM) ausgebildet ist.

3. Verfahren nach Anspruch 1 oder 2, **gekennzeichnet durch** Austausch der Steuerinformationen mit einem Basistreibermodul (Base Driver) als Netzwerksteuerungsmodul, wobei das Basistreibermodul (Base Driver) zur Registrierung von Gerätediensten mit Informationen über zugehörige Geräte und zum Anpassen und Weiterleiten von Steuerungsdaten der Netzwerksteuerungsmodule an die Gerätekontrollmodul-Verwaltungsmodule ausgebildet ist.

4. Verfahren nach einem der vorhergehenden Ansprüche, **gekennzeichnet durch** mindestens ein Registrierungsmodul (HAVi-Registry) als Gerätekontrollmodul-Verwaltungsmodul, wobei die registrierten Gerätekontrollmodule (DCM) in einer Liste des Registrierungsmoduls (HAVi-Registry) abgespeichert werden.

5. Verfahren nach Anspruch 4, **gekennzeichnet durch** Registrierung von Geräten mit den Schritten:
a) Auswahl eines Gerätekontrollmoduls (DCM) für das zu registrierende Gerät;
b) Registrieren des Gerätekontrollmoduls (DCM) bei dem Registrierungsmodul (HAVi-Registry);
c) Übersenden einer Nachricht von dem Registrierungsmodul (HAVi-Registry) an das Basistreibermodul (Base Driver) zur Information über das registrierte Gerät;
d) Registrieren eines Gerätedienstes mit Informationen über das registrierte Gerät **durch** das Basistreibermodul (Base Driver);
e) Aktivieren eines Gerätekontrollmodul-Treibermoduls (HAVi-DCM-Driver) für das registrierte Gerät **durch** die Netzwerksteuerungsmodule;
f) Registrieren einer Schnittstelle zur Steuerung des registrierten Gerätes **durch** das aktivierte Gerätekontroll-Treibermodul (HAVi-DCM-Driver).

6. Verfahren nach einem der vorhergehenden Ansprüche, **gekennzeichnet durch** Steuerung eines registrierten Gerätes mit den Schritten:
a) Anpassen von Zugriffssteuerungsdaten der Netzwerksteuerungsmodule beim Aufrufen einer registrierten Schnittstelle zur Steuerung des Gerätes **durch** das Gerätekontrollmodul-Treibermodul (HAVi-DCM-Driver) und Senden angepaßter Zugriffssteuerungsdaten an das Basistreibermodul (Base Driver);
b) Weiterleiten des Aufrufs der Schnittstelle von dem Basistreibermodul (Base Driver) an ein Meldesystemmodul (MS) der Gerätekontrollmodul-Verwaltungsmodule,
c) Weiterleiten des Aufrufs der Schnittstelle von dem Meldesystemmodul (MS) an das zu dem anzusteuernden Gerät gehörende Gerätekontrollmodul (DCM) zur Steuerung des Gerätes **durch** das Gerätekontrollmodul (DCM).

7. Verfahren nach Anspruch 6, **gekennzeichnet durch** prioritätsgesteuertes Aufrufen der Schnittstellen **durch** das Meldesystemmodul (MS).

8. Verfahren nach einem der vorhergehenden Ansprüche, **gekennzeichnet durch** Überprüfen und Auflösen von Zugriffskonflikten auf Gerätekontrollmodule (DCM) mit einem Resourcenverwaltungsmod ul (Resource Manager) der Gerätekontrollmodul-Verwaltungsmodule.

9. Verfahren nach einem der vorhergehenden Ansprüche, **gekennzeichnet durch** Registrieren zusätzlicher Gerätekontrollmodule (DCM) für ein Gerät mit einem Gerätetreiberinstallationsmodul (HAVi-Driverlnstallation) als Netzwerksteuerungsmodul mit den Schritten:
a) Übergeben eines Gerätekontrollmoduls (DCM) an das Gerätetreiberinstallationsmodul (HAVi-DriverInstallation);
b) Weiterleiten des übergebenen Gerätekontrollmoduls (DCM) an das Gerätekontrollmodul-Treibermodul (HAVi-DCM Driver);
c) Installieren des Gerätekontrollmoduls (DCM) **durch** das Gerätekontrollmodul-Treibermodul (HAVi-DCM Driver).

10. Verfahren nach Anspruch 9, **gekennzeichnet durch** Überprüfen durch das Gerätetreiberinstallationsmodul (HAVi-Driverlnstallation) mittels Zugriff auf einen Gerätetreibermodul-Manager (DCM-Manager) der Gerätekontrollmodul-Verwaltungsmodule, ob bereits ein Gerätetreibermodul (DCM) für das zu registrierende Geräte installiert ist und das installierte Gerätetreibermodul (DCM) ersetzt werden soll und ggf. Deinstallieren der vor-handenen Gerätetreibermodule (DCM) **durch** das Geräte-treiberinstallationsmodul (HA-Vi-DriverInstallation).

11. Verfahren nach einem der vorhergehenden Ansprüche, **gekennzeichnet durch** Ersetzen von Gerätekontrollmodulen (DCM) **durch** andere Gerätekontrollmodule (DCM), wobei das zugehörige Gerätekontrollmodul-Treibermodul (HAVi-DCM Driver) beibehalten bleibt, mit den Schritten:
- Übergeben eines neuen Gerätekontrollmoduis (DCM) von dem zugehörigen Gerätekontrollmodul-Treibermodul (HAVi-DCM Driver) an das Basistreibermodul (HAVi-Base Driver);
- Weiterleiten des Gerätekontrollmoduls (DCM) zu dem Basistreibermodul (HAVi-Base Driver) an das Gerätetreiberinstallationsmodul (HAVi-Driverlnstallation);
- Deinstallieren des zu ersetzenden Gerätekontrollmoduis (DCM) **durch** das Gerätetreiberinstallationsmodul (HAVi-Driverlnstallation) und den Gerätetreibermodul-Manager (DCM-Manager), wobei das Gerätekontrollmodul (DCM) bei dem Registrierungsmodul (HAVi-Registry) angemeldet wird;
- Zuordnen des dem ersetzten Gerätekontrollmodul (DCM) zugeordneten Geräteservice zu dem neuen Gerätekontrollmodul (DCM).

12. Verfahren nach einem der vorhergehenden Ansprüche, **dadurch gekennzeichnet, dass** die Gerätekontrollmodule (DCM) und Gerätekontrollmodul-Verwaltungsmodule konform zu dem Home-Audio-Video-Interoperability-Standard (HAVi) sind.

13. Verfahren nach einem der vorhergehenden Ansprüche, **dadurch gekennzeichnet dass** die Netzwerksteuerungsmodule konform zu dem Open-Service-Gateway-Initiative-Standard (OSGi) sind.

14. Digitales Gerätenetzwerk mit Steuerungsprogrammmitteln zur Durchführung des Verfahrens nach einem der vorhergehenden Ansprüche.

## Claims

1. Method for controlling electronic devices in a distributed network system having
- device control modules (DCM) for the control of devices by other devices in the network system, wherein the device control modules (DCM) access the devices to be controlled directly,
- device control module management modules for managing the device control modules (DCM), and having
- network control modules implemented as software modules, for network control of the kind that a service platform is formed that involves services being able to be dynamically loaded, activated and removed again at runtime, wherein services are processed after having been broken down into packets and the software modules of individual services comprising various packets interact with one another,
**characterized by**
interchange of control information between network control modules and the device control module management modules for the purpose of registering or actuating device control modules (DCM) without direct data interchange taking place between the network control modules and the devices, as a result of which methods available for integrating software components as modules from network control layers operating on the basis of different standards communicate with one another.

2. Method according to Claim 1, **characterized by** interchange of the control information with a device control module driver module (DCM driver) as a network control module, wherein the device control module driver module (DCM driver) is designed to register interfaces for controlling the devices in the network system and to convert method calls from the registered interfaces into message data for the device control modules (DCM).

3. Method according to Claim 1 or 2, **characterized by** interchange of the control information with a base driver module (base driver) as a network control module, wherein the base driver module (base driver) is designed to register device services with information about associated devices and to match and forward control data from the network control modules to the device control module management modules.

4. Method according to one of the preceding claims, **characterized by** at least one registration module (HAVi registry) as a device control module management module, wherein the registered device control modules (DCM) are stored in a list of the registration module (HAVi registry).

5. Method according to Claim 4, **characterized by** registration of devices with the following steps:
a) selection of a device control module (DCM) for the device to be registered;
b) registration of the device control module (DCM) with the registration module (HAVi registry);
c) sending of a message from the registration module (HAVi registry) to the base driver module (base driver) to provide information about the registered device;
d) registration of a device service with information about the registered device by the base driver module (base driver);
e) activation of a device control module driver module (HAVi DCM driver) for the registered device by the network control modules;
f) registration of an interface for controlling the registered device by the activated device control driver module (HAVi DCM driver).

6. Method according to one of the preceding claims, **characterized by** control of a registered device with the following steps:
a) matching of access control data from the network control modules when a registered interface for controlling the device is called by the device control module driver module (HAVi DCM driver) and sending of matched access control data to the base driver module (base driver);
b) forwarding of the call for the interface from the base driver module (base driver) to a report system module (MS) of the device control module management modules,
c) forwarding of the call for the interface from the report system module (MS) to the device control module (DCM) associated with the device to be actuated for control of the device by the device control module (DCM).

7. Method according to Claim 6, **characterized by** priority-controlled calling of the interfaces by the report system module (MS).

8. Method according to one of the preceding claims, **characterized by** checking and resolution of access conflicts on device control modules (DCM) with a resource management module (resource manager) of the device control module management modules.

9. Method according to one of the preceding claims, **characterized by** registration of additional device control modules (DCM) for a device with a device driver installation module (HAVi driver installation) as a network control module with the following steps:
a) transfer of a device control module (DCM) to the device driver installation module (HAVi driver installation);
b) forwarding of the transferred device control module (DCM) to the device control module driver module (HAVi DCM driver);
c) installation of the device control module (DCM) by the device control module driver module (HAVi DCM driver).

10. Method according to Claim 9, **characterized by** checking by the device driver installation module (HAVi driver installation), by means of access to a device driver module manager (DCM manager) of the device control module management modules, to determine whether there is already a device driver module (DCM) installed for the device to be registered and the installed device driver module (DCM) needs to be replaced, and possibly uninstallation of the existing device driver modules (DCM) by the device driver installation module (HAVi driver installation).

11. Method according to one of the preceding claims, **characterized by** replacement of device control modules (DCM) by other device control modules (DCM), wherein the associated device control module driver module (HAVi DCM driver) is retained, having the following steps:
- transfer of a new device control module (DCM) from the associated device control module driver module (HAVi DCM driver) to the base driver module (HAVi base driver);
- forwarding of the device control module (DCM) for the base driver module (HAVi base driver) to the device driver installation module (HAVi driver installation);
- uninstallation of the device control module (DCM) to be replaced by the device driver installation module (HAVi driver installation) and the device driver module manager (DCM manager), wherein the device control module (DCM) is registered with the registration module (HAVi registry);
- association of the device service associated with the replaced device control module (DCM) with the new device control module (DCM).

12. Method according to one of the preceding claims, **characterized in that** the device control modules (DCM) and device control module management modules are compliant with the Home Audio Video Interoperability standard (HAVi).

13. Method according to one of the preceding claims, **characterized in that** the network control modules are compliant with the Open Service Gateway Initiative standard (OSGi).

14. Digital device network having control program means for performing the method according to one of the preceding claims.

## Revendications

1. Procédé de commande d'appareils électroniques dans un système à réseau réparti comportant :
des modules (DCM) de contrôle d'appareil qui permettent de faire commander des appareils par d'autres appareils du système de réseau, les modules (DCM) de contrôle d'appareil accédant directement aux appareils à commander,
des modules de gestion des modules de contrôle d'appareil qui gèrent les modules (DCM) de contrôle d'appareil et
des modules de commande de réseau, configurés sous la forme de modules informatiques, qui commandent le réseau de manière à former une plateforme de service dans laquelle des services peuvent être chargés dynamiquement, activés et supprimés en temps réel, les services étant traités après avoir été décomposés en paquets et les modules informatiques des différents services interagissant les uns avec les autres à partir de différents paquets,
**caractérisé par**
l'échange d'informations de commande entre les modules de commande de réseau et les modules de gestion des modules de contrôle d'appareil pour l'enregistrement ou la commande des modules (DCM) de contrôle d'appareil sans que des données soient échangées directement entre les modules de commande de réseau et les appareils, de telle sorte que les méthodes, disponibles sous forme de modules, de couches de commande de réseau travaillant selon des normes différentes, communiquent les unes avec les autres pour l'intégration des composants logiciels.

2. Procédé selon la revendication 1, **caractérisé par** l'échange des informations de commande avec un module pilote (pilote DCM) des modules de contrôle d'appareil configuré comme module de commande de réseau, le module pilote (pilote DCM) des modules de contrôle d'appareil étant configuré pour enregistrer des interfaces de commande des appareils dans le système de réseau et pour convertir en données de messages pour les modules (DCM) de contrôle d'appareil les demandes de méthodes des interfaces enregistrées.

3. Procédé selon les revendications 1 ou 2, **caractérisé par** l'échange des informations de commande avec un module pilote de base (pilote de base) configuré comme module de commande de réseau, le module pilote de base (pilote de base) étant configuré pour enregistrer des services d'appareil avec des informations concernant les appareils associés et pour adapter et transmettre les données de commande des modules de commande de réseau aux modules de gestion des modules de contrôle d'appareil.

4. Procédé selon l'une des revendications précédentes, **caractérisé par** au moins un module d'enregistrement (registre HAVi) configuré comme module de gestion de module de contrôle d'appareil, les modules (DCM) de contrôle d'appareil enregistrés étant conservés dans une liste du module d'enregistrement (registre HAVi).

5. Procédé selon la revendication 4, **caractérisé par** l'enregistrement des appareils par exécution des étapes suivantes :
a) sélection d'un module (DCM) de contrôle d'appareil pour l'appareil enregistré,
b) enregistrement du module (DCM) de contrôle d'appareil sur le module d'enregistrement (registre HAVi),
c) envoi par le module d'enregistrement (registre HAVi) au module pilote de base (pilote de base) d'un message qui transmet les informations concernant l'appareil enregistré,
d) enregistrement par le module pilote de base (pilote de base) d'un service d'appareil qui contient des informations concernant l'appareil enregistré,
e) activation d'un module pilote (pilote HAVi-DCM) de module de contrôle d'appareil pour l'appareil enregistré par les modules de commande de réseau,
f) enregistrement d'une interface de commande de l'appareil enregistré par le module pilote (pilote HAVi-DCM) de contrôle d'appareil qui a été activé.

6. Procédé selon l'une des revendications précédentes, **caractérisé par** la commande d'un appareil enregistré, par exécution des étapes suivantes :
a) lors de l'appel d'une interface enregistrée, adaptation de données de commande d'accès des modules de commande de réseau pour commander l'appareil par le module pilote (pilote HAVi-DCM) de contrôle d'appareil et envoi de données adaptées de commande d'accès au module pilote de base (pilote de base),
b) transmission de la requête de l'interface par le module pilote de base (pilote de base) à un module (MS) de système d'annonce des modules de gestion des modules de contrôle d'appareil,
c) transmission de la requête de l'interface par le module (MS) de système d'annonce au module (DCM) de contrôle d'appareil qui fait partie de l'appareil à commander, pour faire commander l'appareil par le module (DCM) de contrôle d'appareil.

7. Procédé selon la revendication 6, **caractérisé par** l'appel des interfaces par le module (MS) de système d'annonce en fonction des priorités.

8. Procédé selon l'une des revendications précédentes, **caractérisé par** la vérification et la résolution des conflits d'accès aux modules (DCM) de contrôle d'appareil par un module de gestion des ressources (gestionnaire des ressources) des modules de gestion des modules de contrôle d'appareil.

9. Procédé selon l'une des revendications précédentes, **caractérisé par** l'enregistrement de modules supplémentaires (DCM) de contrôle d'appareil pour un appareil présentant un module d'installation de pilote d'appareil (pilote d'installation HAVi) configuré comme module de commande de réseau, par exécution des étapes suivantes :
a) transmission d'un module (DCM) de contrôle d'appareil au module d'installation de pilote d'appareil (pilote d'installation HAVi),
b) transmission du module (DCM) de contrôle d'appareil transféré au module pilote (pilote HAVi-DCM) des modules de contrôle d'appareil et
c) installation du module (DCM) de contrôle d'appareil par le module pilote (pilote HAVi-DCM) de module de contrôle d'appareil.

10. Procédé selon la revendication 9, **caractérisé par** la vérification par le module d'installation de pilote d'appareil (pilote d'installation HAVi) au moyen de l'accès à un gestionnaire (gestionnaire DCM) de modules pilotes d'appareil des modules de gestion des modules de contrôle d'appareil pour vérifier si un module (DMC) de pilote d'appareil a été installé pour les appareils à enregistrer et si le module (DCM) de pilote d'appareil qui a été installé doit être remplacé, et éventuellement désinstallation des modules (DCM) de pilote d'appareil présents par le module d'installation de pilote d'appareil (pilote d'installation HAVi).

11. Procédé selon l'une des revendications précédentes, **caractérisé par** le remplacement des modules (DCM) de contrôle d'appareil par d'autres modules (DCM) de contrôle d'appareil, le module pilote (pilote HAVi-DCM) des modules de contrôle d'appareil étant conservé, par exécution des étapes suivantes :
- transmission d'un nouveau module (DCM) de contrôle d'appareil par le module pilote (pilote HAVi-DCM) de module de contrôle d'appareil associé au module pilote de base (pilote de base HAVi),
- transmission du module (DCM) de contrôle d'appareil au module pilote de base (pilote de base HAVi) sur le module d'installation de pilote d'appareil (pilote d'installation HAVi),
- désinstallation du module (DCM) de contrôle d'appareil à remplacer par le module d'installation de pilote d'appareil (pilote d'installation HAVi) et le gestionnaire de module pilote d'appareil (gestionnaire DCM), le module (DCM) de contrôle d'appareil étant annoncé au module d'enregistrement (registre HAVi), et
- attribution du service d'appareil associé au module (DCM) de contrôle d'appareil remplacé au nouveau module (DCM) de contrôle d'appareil.

12. Procédé selon l'une des revendications précédentes, **caractérisé en ce que** les modules (DCM) de contrôle d'appareil et les modules de gestion des modules de contrôle d'appareil sont conformes à la norme d'interopérabilité home-audio-vidéo (HAVi).

13. Procédé selon l'une des revendications précédentes, **caractérisé en ce que** les modules de commande de réseau sont conformes à la norme "Open Services Gateway Initiative" - OSGi).

14. Réseau numérique d'appareils doté de moyens de programme de commande permettant d'exécuter le procédé selon l'une des revendications précédentes.
